Europäisches Patentamt

European Patent Office

Office européen des brevets

(11) Publication number: **0 163 509**
A1

# EUROPEAN PATENT APPLICATION

(21) Application number: 85303717.4

(22) Date of filing: 28.05.85

(51) Int. Cl.⁴: **B 60 G 11/22**

(30) Priority: 01.06.84 GB 8414089

(43) Date of publication of application:
04.12.85 Bulletin 85/49

(84) Designated Contracting States:
DE FR

(71) Applicant: SYSPAL LIMITED
Cockshutt Lane
Broseley Shropshire, TF12 5YR(GB)

(72) Inventor: Best, Anthony
Vale Cottage Coulston
Westbury Wiltshire BA13 4NY(GB)

(74) Representative: Stonehouse, Sidney William et al,
Barker, Brettell & Duncan 138 Hagley Road Edgbaston
Birmingham B16 9PW(GB)

(54) Rubber spring vehicle suspension system.

(57) A lightweight suspension system, suitable for example for a caravan, comprises a pair of parallel pivoted suspension arms (12) of hollow section between which is connected and held in compression by them at least one rubber spring (3, 4) preferably of parallelogrammic section longitudinally of the arms. Pivoting movement of the arms produces a shear deflection of the spring and resultant forces exerted on the arm by the spring are applied longitudinally of the arms. Preferably each arm is made from an aluminium extrusion of box section. A mounting bracket (5) and hub carrier (6) to which the arms are pivoted are preferably also of aluminium. A wedge-shaped packing member (11) for adjusting the compression of the spring and a locating plate (10) are bonded to the spring and have hooks (12, 13) by which the spring is attached to the arms.

EP 0 163 509 A1

./...

Croydon Printing Company Ltd

FIG.1

1

## RUBBER SPRING VEHICLE SUSPENSION SYSTEM

This invention relates to rubber spring vehicle suspension systems of the kind in which rubber springs act on suspension arms.

The relative arrangements of the rubber springs and arms of known rubber spring vehicle suspension systems of the said kind are usually such that in use the arms are subjected to substantial leverage. This is so in the case of trailing arm suspensions in which rubber springs act on intermediate parts of the lengths of the suspension arms, and in which rubber springs act in torsion at pivoted ends of the suspension arms. In consequence the arms have had to be of heavy construction to enable them to sustain the bending moments imposed on them in use.

In order to help to reduce fuel consumption it is desirable to reduce the un-laden weight of vehicles, including trailer vehicles. Caravans are a particular example of a trailer vehicle to which the requirement for weight reduction applies, although it does also apply to boat trailers and other trailer vehicles. With the increase in internal fittings which they are expected to carry weight-saving in the structural parts of caravans is becoming more and move desirable. Work has been done on the chassis with this objective but hitherto the suspension systems have tended to have arms of heavy construction, as previously mentioned.

Trailing arm suspensions have commonly been used on caravans. These have provided a relatively hard suspension.

It is a primary aim of the present invention to provide a suspension system by which it is possible to achieve some weight-saving.

According to the present invention a rubber spring vehicle suspension system is provided which comprises pivoted suspension arms on which a rubber spring acts and is characterised in that there is a pair of the suspension arms of hollow section and in parallel and the rubber spring is in the form of a body of rubber between and connected to the arms and which at least in use of the system is held in compression by the arms, the arrangement being such that pivoting movement of the arms produces a shear deflection of the spring and resultant forces exerted on the arms by the spring are applied substantially longitudinally of the arms.

The arms are pivotally mounted for use between the relatively movable parts between which the suspension system is required to act. The pivot co-ordinates and the position of the spring between the arms are arranged such that pivoting movement of the arms produces a shear deflection of the spring. Leverage is thereby exerted on the spring by the relative movement of the arms but the forces exerted on the arms by the spring are essentially longitudinally of the arms. In consequence bending moments on the arms are low. This enables the arms to be of a lightweight form.

For use of the suspension system on a caravan, for example, the suspension arms may be made of aluminium which may give an appreciable saving in weight of the system as compared with known systems having steel suspension arms. It is possible, however, that the suspension arms may be of lightweight steel construction, or be made of other suitable materials, including plastics and reinforced plastics for some applications of the system.

The spacing of the pivots of the arms, horizontally and vertically, is determined according to the intended use of the suspension system to provide the desired working geometrical relationship between the relatively movable parts to be connected by the system, and also to control the deformation of the spring and thereby the effectiveness of the suspension for that use. A softer suspension may be provided than with known trailing arm suspension systems in comparable applications of the present system.

The spring may comprise a block of rubber. Its section in a plane longitudinally of the arms and transverse to the pivotal axes of the arms, in the normal operating positions of the arms, may be square or rectangular but preferably is parallelogrammic, and remains parallelogrammic, or substantially so, throughout movement of the arms in use of the suspension system between bump and rebound positions. This avoids free edges of the spring between the arms being put into tension during movement of the arms.

The spacing of the arms and the thickness of the spring between the arms effects the resonance of the suspension. These are determined according to the working requirements of the system. Reducing the spacing and thickness of the spring increases the shear and compression strain in the spring under load.

Herein the term "rubber" is intended to include natural rubber, synthetic rubber and suitable synthetic polymers. The rubber should have good fatigue life and low creep.  A preferred natural rubber is sulphur cured and contains G.P.F. black.

The compression of the spring may be adjusted by altering the inclination of the spring relative to at least one of the arms by inserting wedge-shaped packing between the spring and the arm.

There may be more than one of the springs acting between the arms.  For use in a caravan there are preferably two of the springs spaced apart transversely of the arms.

Brackets and/or carrier members are preferably provided at opposite ends of the arms to which the arms are pivotally connected and which are adapted to be secured to, or may be permanently fixed to, the relatively movable parts between which the suspension system is required to act.  Rubber bushings are preferably included in the pivotal connections of the arms to the brackets or carrier members to reduce maintenance of the connections and to quieten the connections.  Adjacent ends of the arms may be connected to a common bracket or carrier member.

A damper may be incorporated in the system, in addition to the spring, which acts between the arms to reduce resonance.  Whether or not a damper is required will depend upon the use of the suspension system.  For some caravans the damper may not be needed.

As is usual in double-arm parallel suspension systems for vehicles, the arm which is lowermost in installation of the system is preferably longer than the upper arm in order to allow the camber angle of the wheel with which the system is associated to change as the wheel deviates vertically from its normal running position.

For strength, whilst retaining lightness, the arms are preferably of box or channel section. For convenience in manufacture the arms may be made from extruded sections. The arms may be of similar sections. Also for strength and torsional rigidity the arms may be of substantial width relative to their lengths. When the arms do have substantial width it is advantageous to have two transversely spaced springs as previously mentioned, rather than having a single bulky spring. Instead of having the wide arms it may be possible for some installations to have the arms, or at least one of them, normally the upper one, duplicated.

In a preferred embodiment of the invention, the or each spring clips into engagement with the arms, which simplifies assembly of the system. The or each spring is of block form and has a hook or hooks at two diagonally opposite edges which respectively hook from opposite directions longitudinally of the arm over retaining parts of the arm. The hooks are pulled into engagement with the retaining parts by the spring throughout the range of pivoting movement of the arms. Other ways of connecting the spring or springs to the arm may be employed, if desired, but that described is preferred for its simplicity of fitting.

An embodiment of the invention will now be described by way of example only with reference to the accompanying drawings in which:-

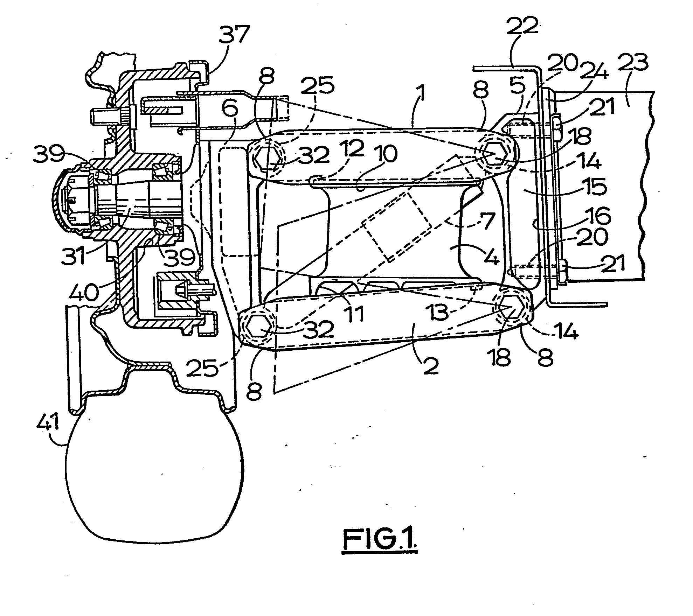

Figure 1 is a front view of an independent, rubber spring vehicle suspension system in accordance with the present invention, and

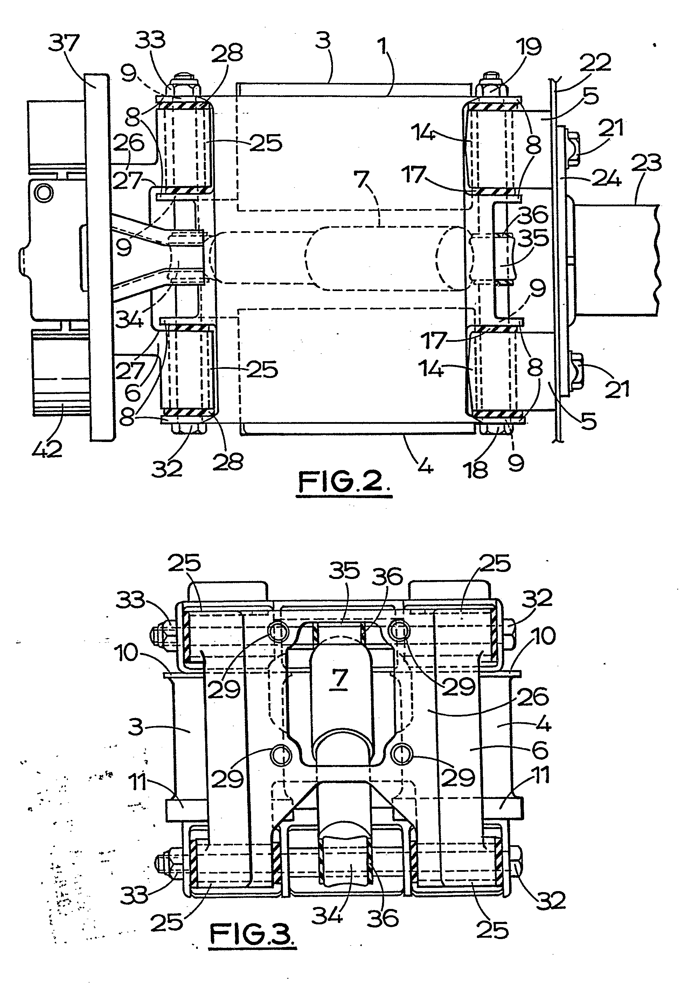

Figures 2 and 3 are respectively plan and outer end views of the suspension system.

This embodiment of the suspension system is intended for use on a caravan.

The suspension system comprises parallel upper and lower suspension arms 1 and 2 respectively, two similar rubber springs 3, 4 connected to and acting between the two arms, a pair of chassis mounting brackets 5 to which the inner ends of the arms are pivoted, a hub carrier 6 to which outer ends of the arms are pivoted, and a damper 7 which acts between the arms.

Each arm 1, 2 is formed from a length of extruded aluminium of rectangular box section disposed with the longer sides of the section running horizontally and which is divided internally by integral partition walls into three chambers, not shown, which extend side-by-side longitudinally of the arm. The sections of the two arms are the same so that one form of extrusion suffices for both. The widths of the arms are slightly less than their lengths. The upper arm 1 is shorter than the lower arm 2. Near the ends of the arms top and bottom walls of the section are cut away to leave the side walls and partition walls projecting as lugs 8 which are tapered towards their extremities and have co-axial holes 9 drilled out of them for the pivotal connection of the arms to the chassis mounting brackets 5 and the hub carrier 6. Effectively the lugs at each end of each arm are in two pairs at opposite sides of the arm. The inner end of the bottom wall of the upper arm and the outer end of the top wall of the lower arm are cut away at the central chamber parts of the arms to provide recesses, not shown, which accommodate respectively the upper and lower ends of the damper 7.

The two rubber springs 3, 4 are located in transverse alignment between the arms at the parts of the arms containing the outer chambers of the arms. The springs are identical. Each comprises a solid block of rubber which is rectangular in plan and of parallelogrammic vertical section elongated longitudinally of the arms and canted upwardly towards the inner ends of the arms, and which has bonded to its top and bottom surfaces respectively a top locating plate 10 and a wedge-shaped packing member 11. Adjacent to the top locating plate 10 and the packing member 11 the side walls of the block flare outwards in a radius to meet the top locating plate and packing member. Preferably the rubber is a sulphur cured natural rubber containing G.P.F. black and having a modulus of rigidity of 1MN/m². The top locating plate 10 is of plain flat form with its outer edge turned upwards and over to present a locating hook 12 which engages over the outer edge of the bottom wall of the upper arm 1 for locating the spring relative to that arm. The packing member 11 tapers towards the inner ends of the arms, has lightening recesses in its undersurface and is formed at its inner end with a turned under hook 13 which engages over the inner edge of the top wall of the lower arm 2 for locating the spring relative to that arm. Both the top locating plate and the packing member are made of aluminium. At least the packing member is formed as an extrusion.

The spring is held in compression between the arms in the normal operating positions of the arms and in their full rebound positions. The extent of the compression on bump movement of the arms is effected by the wedge shape of the packing member, the sharper the taper of the member the greater the compression. A similar packing member may be substituted for the top locating plate, if desired. The spring retains a parallelogrammic, or substantially parallelogrammic, section throughout the range of pivotal movement of the arms.

The two chassis mounting brackets 5 are identical to one another. Each is made of aluminium and contains two vertically spaced, horizontally extending, tubular bearings 14 connected by an integral web 15 to an integral back plate 16. Each bracket 5 fits between a pair of the lugs 8 of the upper arm and the corresponding pair of lugs of the lower arm at the inner ends of the arms, with its bearings 14 in axial alignment with the holes 9 in the respective pairs of lugs. Rubber bushes 17 are located in the bearings. The bushes 17 protrude from and over-lie the ends of the bearings and thereby serve also as packing between the bearings and the lugs to restrain the arms from movement axially of the bearings. Pivot bolts 18 are passed through the bushed bearings 14 and the registering holes 9 and are retained by nuts 19 to connect the upper and lower arms pivotally to the brackets 5. There are two vertically spaced, internally screw-threaded blind holes 20 in each bracket which extend through the back plate 16 and into the web 15. The blind holes 20 receive complementary fixing bolts 21 for securing the brackets to chassis members 22, 23 of a caravan.

In the drawings the chassis members 22, 23 are shown as a generally Z-section longitudinal member 22 and a rectangular box section cross member 23 which has an end plate 24 fixed to it. The fixing bolts 21 are passed through the end plate 24 and longitudinal member and tightened into the blind holes 20 of the brackets. The brackets may be fixed to other chassis members.

The hub carrier 6 is made of aluminium. It comprises two pairs of vertically spaced, horizontally extending, tubular bearings 25 similar to those of the chassis mounting brackets but the two pairs of bearings are connected by an integral, upright, mounting portion 26 which is off-set outwardly of the bearings and joined to them by webs 27. The two pairs of bearings 25 are in axial alignment. They fit between the pairs of lugs 8 at the outer ends of the upper and lower arms, in axial alignment with the holes 9 in the lugs. Rubber bushes 28 are located in the bearings 25 which, again, protrude from and over-lie the ends of the bearings so as to serve also as packing between the bearings and the lugs to restrain relative axial movement between the arms and the bearings. Pairs of vertically spaced, internally screw-threaded blind holes 29 are formed in the mounting portion 26 and adjacent webs 27. These blind holes 29 receive fixing bolts, not shown, by which a stub axle 31 is secured to the hub carrier. Pivot bolts 32 are passed through the bushed bearings 25 and the registering holes 9 of the lugs 8 and are fitted with retaining nuts 33 to connect the upper and lower arms pivotally to the hub carrier.

Preferably the chassis mounting brackets 5 and the hub carrier 6 are produced by a squeeze forming process. They may alternatively be made by forging or, with some adjustment of their forms, they may be made from extrusions.

The damper 7 is a known hydraulic telescopic shock absorber. It extends centrally between the outer end of the lower arm and the inner end of the upper arm. An eye 34 at the lower end of the damper is attached to the pivot bolt 32 connecting the outer end of the lower arm to the lower bearings 25 of the hub carrier, and an eye 35 at the upper end of the damper is attached to the pivot bolt 18 connecting the inner end of the upper arm to the upper bearings 14 of the chassis mounting brackets 5. The eyes 34 and 35 are disposed in the spaces between the respective bearings 25 and 14. The adjacent ends of the damper pass with clearance through the recesses in the arms. Rubber bushes 36 are fitted in the eyes.

Bolted to the mounting portion 26 of the hub carrier 6, by means of the blind holes 29, are a brake back plate 37 and the stub axle 31 on which is mounted by bearings 39 a wheel hub 40 and wheel 41. Brake shoes 42 operate in the hub 40 in known manner.

It will be appreciated from the foregoing description and the accompanying drawings that when the wheel 41 is deflected vertically by riding over a bump the movement of the arms 1, 2 produces a shear deflection of the rubber springs 3, 4 acting to restore the arms subsequently to their normal ride positions. The forces exerted on the arms by the springs 3, 4 in consequence of the relative movement of the arms are substantially longitudinally of the arms so that the bending moments on the arms are low. In the particular form shown in the drawings the leverage on the arms resulting from the relative movement is of the order of 2:1. By virtue of the lower arm 2 being longer than the upper arm 1, under full bump deflection the wheel has a small negative camber (typically 1.3° in the arrangement as shown) and on full rebound deflection the wheel has a small positive camber (typically 1.4° in the arrangement as shown).

Instead of the single upper arm 1 two side-by-side arms may be provided. They could be similar in form to the two outer parts of the single upper arm without the central chamber part.

For the substantial saving in weight that can be achieved in the suspension system described, which as stated is intended for use on a caravan, the arms, chassis mounting brackets, hub carrier, and the top locating plates 10 and packing members 11 of the springs have all been described as being made of aluminium. It will be understood, however, that in applications where weight saving is not so important at least some of the components may be made of steel.

CLAIMS

1. A rubber spring vehicle suspension system which comprises pivoted suspension arms on which a rubber spring (3, 4) acts and is characterised in that there is a pair of the suspension arms (1, 2) of hollow section and parallel and the rubber spring (3, 4) is in the form of a body of rubber between and connected to the arms (1, 2) and which at least in use of the system is held in compression by the arms (1, 2), the arrangement being such that pivoting movement of the arms (1, 2) produces a shear deflection of the spring (3, 4) and resultant forces exerted on the arms (1, 2) by the spring (3, 4) are applied substantially longitudinally of the arms (1, 2).

2. A rubber spring vehicle suspension system according to claim 1 characterised in that the arms (1, 2) are each of a hollow box-section transversely.

3. A rubber spring vehicle suspension system according to claim 2 characterised in that each arm (1, 2) is made from a one-piece extrusion of the hollow box-section.

4. A rubber spring vehicle suspension system according to claim 2 or claim 3 characterised in that the interior of the box-section of each arm (1, 2) is divided by partition walls into chambers which extend longitudinally of the arm (1, 2).

5. A rubber spring vehicle suspension system according to any preceding claim characterised in that each arm (1, 2) is of substantial width relative to its length.

6. A rubber spring vehicle suspension system according to any preceding claim characterised in that each arm (1, 2) is made of aluminium.

7. A rubber spring vehicle suspension system according to any preceding claim characterised in that the spring (3, 4) comprises a block of rubber having a parallelogrammic section in a plane longitudinally of the arms (1, 2) and transverse to the pivotal axes of the arms (1, 2).

8. A rubber spring vehicle suspension system according to claim 7 characterised in that a wedge-shaped packing member (11) is interposed between the spring (3, 4) and one arm (2) which inclines the spring (3, 4) relative to the arm (2) longitudinally thereof and thereby adjusts the compression of the spring (3, 4).

9. A rubber spring vehicle suspension system according to any preceding claim characterised in that there are two of the springs (3, 4) acting on the arms (1, 2), the springs (3, 4) being spaced apart transversely of the arms (1, 2).

10. A rubber spring vehicle suspension system according to any preceding claim characterised in that the or each spring (3, 4) has associated opposed hooks (12, 13) which clip from opposite directions longitudinally of the arms (1, 2) over retaining parts on the arms (1, 2) thereby to attach the spring (3, 4) to the arms (1, 2), the hooks (12, 13) being urged into engagement with the retaining parts by the spring (3, 4) throughout the range of pivoting movement of the arms (1, 2).

0163509

14

11. A rubber spring vehicle suspension system according to claim 10 characterised in that a locating plate (10) is interposed between the or each spring (3, 4) and the other arm (1) and is bonded to the spring (3, 4), and the hooks (12, 13) are provided on the locating plate (10) and the packing member (1) adjacent two diagonally opposite corners of the parallelogrammic section of the block of rubber.

12. A rubber spring vehicle suspension system according to any preceding claim characterised in that adjacent ends of the pair of arms (1, 2) are pivotally connected to a common bracket (5) or carrier member (6) which is adapted to be secured to, or is permanently fixed to, a respective one of the relatively movable parts between which the suspension system is to act in use.

13. A rubber spring vehicle suspension system according to claim 12 characterised in that the adjacent ends of the arms (1, 2) have pairs of spaced lugs (8), the bracket (5) or carrier member (6) has tubular bearings (14, 25) containing rubber bushes (17, 28) and disposed between the lugs (8) of each of the pairs, pivot elements (18, 32) are passed through the bushes (17, 28) and retained to the lugs (8) thereby to connect the arms (1, 2) pivotally to the bracket (5) or carrier member (6) at the bearings (14, 25), and the bushes (17, 28) protrude from the bearings (14, 25) to provide packing between the bearings (14, 25) and the lugs (8) which restrains the arms (1, 2) from movement axially of the bearings (14, 25).

14. A rubber spring vehicle suspension system according to any preceding claim characterised in that a damper (7) acts between the arms (1, 2) to reduce resonance.

15. A rubber spring vehicle suspension system according to claim 14 characterised in that the damper (7) is a hydraulic telescopic shock absorber which extends between an end of the arm (1) and an opposite end of the other arm (2).

16. A rubber spring vehicle suspension system according to claim 11 characterised in that the arms (1, 2) have inner ends pivotally connected to a mounting bracket (5) adapted to be secured to a vehicle chassis, and outer ends pivotally connected to a hub carrier (6), the spring (3, 4) has the parallelogrammic section of the rubber block normally canted from a first one of the arms (2) towards the inner end of the other, second arm (1), the hooks (12, 13) are adjacent the two diagonally opposite corners of the parallelogrammic section which are respectively adjacent to the inner end of the first arm (2) and the outer end of the second arm (1), and the hooks (12, 13) clip over transverse edges of facing walls of the arms (1, 2), being edges respectively adjacent to the inner end of the first arm (2) and adjacent to the outer end of the second arm (1).

17. A rubber spring vehicle suspension system according to claim 16 characterised in that a hydraulic telescopic shock absorber (7) extends between the outer end of the first arm (2) and the inner end of the second arm (1), and is connected to pivot elements (18, 32) whereby the outer end of the first arm (2) is pivotally connected to the hub carrier (6) and the inner end of the second arm (1) is pivotally connected to the mounting bracket (5).

18. A rubber spring vehicle suspension system according to any of claims 12, 13, 16 and 17 wherein the arms (1, 2), the bracket (5) and carrier member (6) are all made of aluminium.

1/2

0163509

FIG.1.

**0163509**

2/2

FIG.2.

FIG.3.

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 166 880 (SCHUH et al.) <br><br> * Claims 1,2; figures 7-9 * | 1,5,10 ,11 | B 60 G 11/22 |
| Y | | 2,7-9, 12,13, 16 | |
| Y | US-A-2 212 769 (BOXAN) <br><br> * Column 1, line 19 - column 2, line 5; figure 2 * | 7,9,12 ,16 | |
| A | | 1,13 | |
| Y | FR-A-1 077 621 (METALASTIK) <br> * Page 3, lines 11-39; figure 1 * | 8 | TECHNICAL FIELDS SEARCHED (Int. Cl.4) |
| A | | 1,7 | B 60 G 11/00 <br> B 60 G 15/00 |
| Y | FR-A-2 314 069 (LABOMEKA ANSTALT) <br> * Figure 1 * | 2 | |
| Y | AT-B- 180 490 (FIRESTONE TIRE & RUBBER) <br> * Whole document * | 13 | |
| | --- -/- | | |

The present search report has been drawn up for all claims

| Place of search | Date of completion of the search | Examiner |
|---|---|---|
| BERLIN | 23-07-1985 | STANDRING M A |

**European Patent Office**

**EUROPEAN SEARCH REPORT**

EP 85 30 3717

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-C- 757 673 (GETEFO) <br><br> * Figures 1,2; lines 71-86 * | 1,7,9, 12,13 | |
| A | DE-C- 722 533 (AUTO UNION) <br><br> * Figures 1,2 * | 1,7,11 ,12 | |
| A | FR-A-1 073 914 (DUNLOP RUBBER) <br><br> * Figure 2 * | 1,14, 17 | |
| A | DE-U-1 900 892 (AUTO UNION) <br><br> * Whole document * | 14,15, 17 | |
| A | US-A-3 711 113 (STAMMREICH) <br><br> * Figures 1,2 * | 14,15, 17 | TECHNICAL FIELDS SEARCHED (Int. Cl.4) |
| A | US-A-2 695 779 (BRANDT) | | |
| A | FR-A- 851 859 (PRESSED STEEL) | | |
| A | EP-A-0 083 183 (FORD) | | |

The present search report has been drawn up for all claims

| Place of search | Date of completion of the search | Examiner |
|---|---|---|
| BERLIN | 23-07-1985 | STANDRING M A |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82